# EUROPÄISCHE PATENTANMELDUNG

(11) **EP 3 069 640 A1**
(43) Veröffentlichungstag der Anmeldung: **21.09.2016**
(21) Anmeldenummer: 15159142.7
(22) Anmeldetag: 16.03.2015
(51) Int. Cl.: A47J 31/44

(54) **VORRICHTUNG ZUM ERZEUGEN VON ERWÄRMTEN FLIESSFÄHIGEN GESCHÄUMTEN ERZEUGNISSEN**

(71) Anmelder: Brainaix Swiss AG, 8423 Embach-Embraport (CH)
(72) Erfinder: Zollinger, Martin, 8425 Oberembrach (CH)

(57) **Zusammenfassung**

Vorrichtung zum Erzeugen von erwärmten, fließfähigen geschäumten Erzeugnissen, bei der eine Flüssigkeit aus einem Vorratsbehälter über eine Einlassleitung einer Pumpe mit einem Auslass verbunden ist, die Flüssigkeit vor dem Einlass der Pumpe über ein Luftanreicherungselement mit Luft durchsetzt wird, und die Flüssigkeit nach dem Vorratsbehälter und vor dem Luftanreicherungselement über eine Erwärmungsvorrichtung erwärmt wird sowie deren Verwendung.

## Beschreibung

Die vorliegende Erfindung betrifft eine Vorrichtung zur Herstellung fließfähiger, essbarer und geschäumter Erzeugnisse mit verbesserter und stabiler Schaumqualität sowie deren Verwendung.

Es ist bekannt, dass die Geschmacksempfindung und das Mundgefühl von Lebensmitteln erheblich durch Anwesenheit von Blasen beeinflusst werden. Das Hinzufügen von Gasblasen zu fettarmen Erzeugnissen verbessert auch deren sensorische Eigenschaften. Die geschmackliche Wahrnehmung wird außerdem durch Menge und Größe der Gasblasen beeinflusst. Zur Herstellung von geschäumten, fließfähigen Erzeugnissen, in denen die Blasen für ein paar Wochen bis Monate erhalten bleiben, werden kleine Blasen bevorzugt. Der Begriff Stabilität ist in diesem Zusammenhang so zu verstehen, dass die in dem geschäumten Produkt enthaltenen Gasblasen für eine längere Zeit ohne Veränderungen in ihrer Größe und Anzahl bestehen bleiben. Geschäumte Erzeugnisse sind per Definition thermodynamisch instabil. Die drei wichtigsten Destabilisierungsprozesse sind Aufrahmen, Koaleszenz und Disproportionierung der schaumbildenden Gasblasen. Während die Aufrahmung und die Verschmelzung bei fließfähigen Erzeugnissen meist keine großen Probleme aufwerfen, ist die Disproportionierung (Ostwald-Reifung) problematisch. Es ist bekannt, dass ein Schaum mit breiter ungleichmäßiger Blasengrößenverteilung zur Destabilisierung neigt, da im Inneren der Gasblasen ein unterschiedlicher Laplace-Druck herrscht. Aufgrund von Gasdiffusion zwischen Gasblasen unterschiedlicher Größe und zwischen Gasblasen und ihrer Umgebung breiten sich große Gasblasen auf Kosten von kleineren Gasblasen aus, die großen Blasen wachsen auf Kosten der kleinen Blasen. Dadurch verändert sich das Erscheinungsbild erheblich und die Aufrahmung wird beschleunigt. Eine Stabilisierung gegen Disproportionierung wird - wenn überhaupt - durch die rheologischen Eigenschaften der kontinuierlichen Phase z. B. bei einem Mousse teilweise durch das vorhandene Gelatinenetzwerk realisiert.

Im Falle von fließfähigen geschäumten Erzeugnissen kann die langfristige Stabilisierung gegen Disproportionierung über die Eigenschaften der Blasenoberfläche erzielt werden, wie es in der EP 1 520 630 A1 offenbart ist. Dabei wird in einem ersten Schritt ein monodisperser Schaum hergestellt, in dem aus Milch und Luft in einem ersten Schaumbildungsschritt ein verhältnismäßig grober Vorschaum gebildet wird, der unzureichend monodispers ist, und dieser Vorschaum durch eine Membran mit einem bestimmten Porendurchmesser geleitet wird. Damit diese Membrane einen monodisperser Schaum erzielen kann, muss diese eine Dicke von zumindest dem 30-fachen des Porenradius haben. In einem zweiten Schritt wird dann durch Geschmacksempfindung die geeignete Wahl der Blasengröße des Schaumes eingestellt, dann die Blasengröße des Milchschaums bestimmt. Dann wir in einem dritten Schritt die Porengröße der Membran ausgewählt, die etwa 10 mal kleiner sein soll als die gewünschte Blasengröße. Unter einem monodispersen Schaum ist ein Schaum zu verstehen, dessen Blasen im Wesentlichen die gleiche Größe aufweisen. Die im Wesentlichen gleiche Größe ist so aufzufassen, dass die Monodispersität des Schaums, der nach dem Verfahren der EP 1 520 630 gebildet wird, sich im Vergleich zu dem verhältnismäßig groben Vorschaum zeigt, der unzureichend monodispers ist.

Ferner ist aus der US 5 071 379 bekannt, kostengünstig einen stabilen Schaums mit gleichbleibender Qualität herzustellen, indem eine Flüssigkeit aus einem Behältnis durch eine Leitung über eine poröse Membran in eine Kammer geführt wird, in die ein Lufteinlass mündet. Der dabei erhaltene Schaum wird durch zumindest eine weitere Membran geleitet, bevor er abgegeben wird. In einer Ausführungsform wird dazu ein nicht deformierbarer Behälter für die Flüssigkeit mit einer Handpumpe verwendet. Der Pumpenbehälter bildet dabei die Kammer, die mit dem Lufteinlass verbunden ist. In diese Kammer wird durch Betätigung der Handpumpe über eine Membran Flüssigkeit aus dem Flüssigkeitsbehälter gesaugt und der in der Kammer gebildete Schaum über zumindest eine weitere Membran abgegeben. Die Qualität des gebildeten Schaums hängt dabei von der Feinheit der Poren (Porendurchmesser) der porösen Membran, der Anzahl der Membranen und der verwendeten Flüssigkeit ab. Dabei können auch Membranen unterschiedlicher Porenfeinheit eingesetzt werde, wobei einer Membran mit relativ weiten Porenöffnungen (z.B. 120 µm) Membranen mit kleineren Porenöffnungen folgen (z.B. 90 und 70 µm). Die Membranen weisen eine Dicke von 0,05 bis 5 mm und Poren mit einer Abmessung von 10 bis 250 µm auf, wobei eine Größe der Poren von 80 bis 120 µm bevorzugt ist. Der beim Einmischen des Gases in die Schaumvorrichtung sich bildende oder durch die erste Membran geleitete Schaum ist kein Schaum mit gleichbleibender Qualität (d.h. monodispers) sondern ein weniger stabiler Schaum, der als "Vorschaum" bezeichnet werden kann. Der Schaum, der dann im Verlauf des Verfahrens durch die weitere Membran oder durch die weiteren Membranen mit einer bestimmten Dicke und Porengröße geleitet wird, ist ein sehr stabiler Schaum, dessen zellulare Feinheit von der Porengröße und Dicke der eingesetzten Membranen abhängt. Eine einfache Variation der Schaumqualität ist nicht offenbart.

Die US 6 192 785 beschreibt Hier wird der Milch Luft ebenfalls vor dem Druckbereich zugegeben und mittels einer Pumpe der Ausgabevorrichtung zugeführt. Die Milch wird mit Dampf erhitzt. Der Durchlauferhitzer ist hinter dem Luftanreicherungselement offenbart. Eine schnelle Variation der Schaumqualität ist mit dieser Vorrichtung nicht möglich.

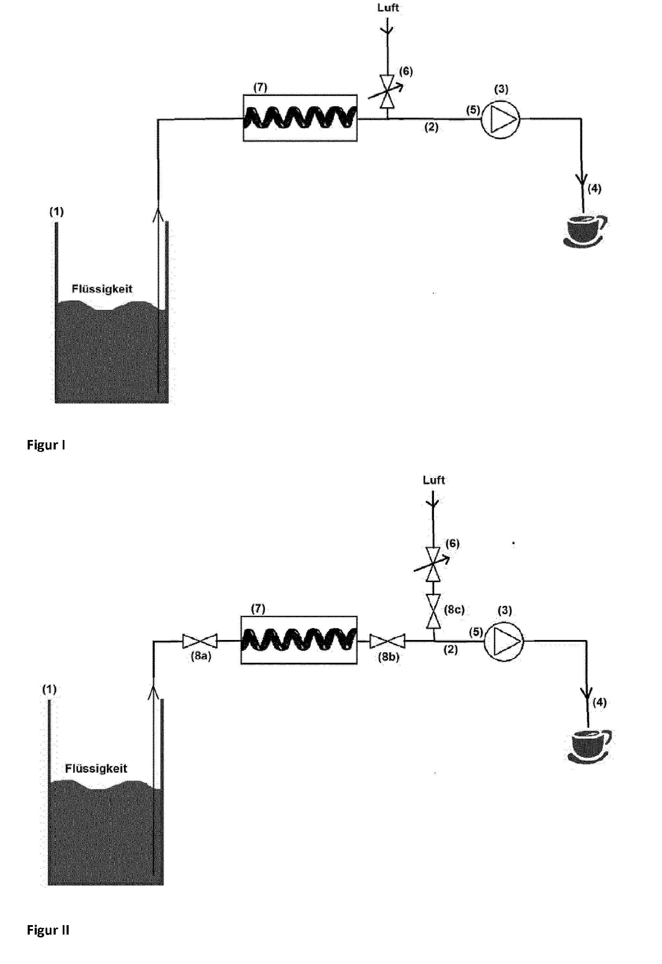

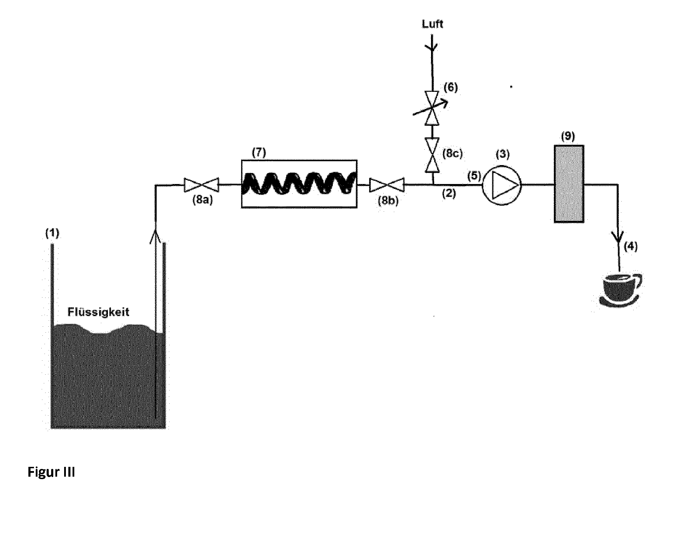

Die EP 1 395 155 A1 zeigt ein Gerät zur Herstellung eines Getränks mit einer Schaumschicht, welches Luft vor der Mischkammer der Milch zugibt, um die Homogenität des Getränks zu verbessern. Auch ist eine Druckerhöhung auf "0,5 bis 5 Atmosphären" genannt. Zwischen Auslassdüse und Milchheizung ist ein Ventil offenbart (Fig. 1, Bezugszeichen 18). Eine Der Durchlauferhitzer ist hinter dem Luftanreicherungselement angeordnet.

In der DE 20 2004 020 619 U1 ist ein Bläschenformer zum Erzeugen eines feinporigen Flüssigkeitsschaums offenbart, der aus einem scheibenförmigen Strahlteiler mit einer feinmaschigen Struktur aus einem Kunststoff- oder Edelstahlgewebe gebildet ist. Die Erzeugung des Milchschaums erfolgt bei "niedrigem Betriebsdruck" durch einen Strahlteiler, der in der der Brühgruppe angeordnet ist. Eine schnell veränderbare Schaumqualität ist nicht offenbart.

Die US 6 019 032 A beschreibt eine Vorrichtung zum Schäumen einer Flüssigkeit, bei der eine Flüssigkeit aus einem Vorratsbehälter über eine Einlassleitung einer Pumpe mit einem Auslass verbunden ist. Die Flüssigkeit wird über ein Luftanreicherungselement mit Luft durchsetzt, ein Durchlauferhitzer oder ein Sieb sind nicht offenbart. Die Flüssigkeit wird nach dem Durchsetzen mit Luft durch Zufuhr von Heißdampf erhitzt.

Aus der WO 2008/83941 A1 ist eine Vorrichtung zum Schäumen einer Flüssigkeit (Milch) bekannt, bei der Milch vor einer Zahnradpumpe mit Luft vermischt wird. Zwischen der Pumpe und dem Durchlauferhitzer ist eine Drosselstelle angeordnet, die einen Überdruck in dem System bewirkt und über die die geförderte Milch oder Milchschaummenge bestimmt werden kann. In einer weiteren Ausführungsform ist eine Bypassfunktion beschrieben, demzufolge über ein 3/2-Wegeventil die Milch wahlweise über den Durchlauferhitzer oder über den direkten Weg zum Auslass gegeben wird, um eine Umschaltung zwischen Kalt- und Warnschaum zu erzielen. Eine Variation der Schaumqualität ist nicht offenbart.

Aus der DE 10 2008 058 934 ist ein Milchschaumgerät bekannt, bei dem der Milchvorratsbehälter über eine Leitung mit einer Zahnradpumpe verbunden ist und die Pumpe über eine zweite Leitung mit einer Auslassdüse verbunden ist. Über ein manuell einstellbares Ventil wird die Flüssigkeit vor der Pumpe mit Luft durchsetzt und vor der Auslassdüse ist ein Sieb bzw. eine Membrane angeordnet. Der Auslass der Membrane wird drucklos betrieben. Diese Geräte sind unter der Bezeichnung "Cream-Creator" im Handel. Eine Variation der Schaumqualität ist zwar möglich, jedoch ist die Reaktionszeit, d.h. bis die Veränderung der Luftmenge eine Veränderung in der abgegebenen Schaumqualität bewirkt, inakzeptabel.

Ausgehend von diesem Stand der Technik ist die Aufgabe der vorliegenden Erfindung die Bereitstellung eines Vorrichtung zur Herstellung erwärmter, fließfähiger, essbarer und geschäumter Erzeugnisse mit schnell veränderbarer und stabiler Schaumqualität, insbesondere zur Herstellung von Milchschaum.

Unter dem Begriff "stabiler Schaum" wird im Sinne der vorliegenden Erfindung ein Schaum mit einer möglichst gleichmäßigen Blasenverteilung während der gesamten Bezugszeit verstanden. Ein "stabiler Schaum" im Sinne der vorliegenden Erfindung darf nach Bezug und einer Verweilzeit von 60 Minuten in einem Glas keinen Volumenschwund von mehr als 20 % - bezogen auf das ursprüngliche Volumen des Schaums direkt nach Bezug - zeigen.

Unter dem Begriff "schnell veränderbare Schaumqualität" wird im Sinne der vorliegenden Erfindung verstanden, dass die Zeit zwischen einer Änderung der durch das Luftanreicherungselement durchgeführten Luftzufuhrmenge und einer sich am Auslass des Geräts veränderten Schaumqualität weniger als eine Sekunde beträgt. Die veränderte Schaumqualität zeigt sich dabei in der mittleren Porengröße des Schaums: Wird mehr Luft durch das Luftanreicherungselement in die Vorrichtung zur Herstellung erwärmter, fließfähiger, essbarer und geschäumter Erzeugnisse eingebracht, so nimmt die mittlere Porengröße zu, der Schaum wird nach kurzer Zeit des Stehenlassens fester, als bei weniger Luftzufuhr unter vergleichbaren Bedingungen. Ein weiterer, einfacher Test in Bezug auf die veränderbare Schaumqualität ist das Hinzugeben von Zucker auf die Schaumkrone: Bei wenig Luftzufuhr entsteht ein sehr feinporiger Schaum, der zucker sinkt viel schneller ein, als bei einem grobporigen Schaum, der durch Hinzugabe von mehr Luft entsteht.

Die erfindungsgemäße Aufgabe wird durch eine Vorrichtung zum Erzeugen von erwärmten, fließfähigen geschäumten Erzeugnissen gelöst, bei der eine Flüssigkeit aus einem Vorratsbehälter (1) über eine Einlassleitung (2) einer Pumpe (3) mit einem Schaumauslass (4) verbunden ist, die Flüssigkeit vor dem Einlass (5) der Pumpe (3) über ein in der Luftzufuhrmenge einstellbaren Luftanreicherungselement (6) mit Luft durchsetzt wird, und die Flüssigkeit nach dem Vorratsbehälter und vor dem Luftanreicherungselement über eine Erwärmungsvorrichtung (7) erwärmt wird.

Das Besondere an dieser erfindungsgemäßen Ausführung ist, dass kein Dampfgenerator und keine Venturidüse vorhanden ist, wie es bei vielen Ausführungen des Standes der Technik der Fall ist.

Die Erhitzung der zu schäumenden Flüssigkeit durch ein heißes flüssiges oder gasförmiges Medium, beispielsweise durch Heißdampf, ist entsprechend der vorliegenden Erfindung ausgeschlossen. Bezogen auf das zu schäumende Medium Milch ist Folgendes anzumerken: Es ist bekannt, dass zur Herstellung eines optimalen Milchwarmschaums die Milch nicht über 64 °C erhitzt werden sollte. Bei der Erwärmung der Milch über Dampf hat der Heißdampf üblicherweise 125 °C. Über eine Düse, meistens über eine auf dem Venturi-Prinzip basierende Düse, wird dieser Heißdampf mit der auf ca. 4 °C gekühlten Milch verwirbelt. Bei dem Zusammentreffen von Heißdampf und Milch entstehen lokale Überhitzungen, die zu einer Zerstörung der Proteine und einem Karamellisieren der Lactose führen. Darüber hinaus wird die Milch durch die Wasserzufuhr über den Heißdampf verdünnt. Diese Zersetzungs- und Verdünnungsprozesse sind geschmacklich eindeutig wahrnehmbar und angesichts der sich immer weiter steigernden Anforderungen der Konsumenten nicht mehr akzeptabel.

Durch die erfindungsgemäße Anordnung ist es erstmals möglich, eine schnelle Reaktionszeit zwischen einer Änderung der durch das Luftanreicherungselement durchgeführten Luftzufuhrmenge und der sich am Auslass des Geräts zeigenden Änderung der Schaumqualität zu erreichen. Selbst bei niedrigen Fördermengen des geschäumten Erzeugnisses, beispielsweise bei weniger als 200 ml Schaum pro Minute, bewirkt eine Veränderung der Luftzufuhr am Luftanreicherungselement eine Änderung der Schaumqualität innerhalb von weniger als 1 Sekunde. Dies ist erstmals möglich, da das Totraumvolumen hinter dem Auslass der Pumpe durch die erfindungsgemäße Anordnung unter 3 ml reduziert werden kann. Diese Reduktion wird durch den Fachmann in an sich bekannter Weise durch Auswahl von Schläuchen mit geringem Querschnitt und kurzen Strecken erzielt.

Würde die Erwärmungsvorrichtung hinter dem Pumpenauslass angeordnet werden (nicht erfindungsgemäß), würde das zur Erhitzung notwendige Volumen des Erwärmungselements deutlich höher sein, als das für eine schnelle Reaktionszeit (von Luftmengenänderung zur Ausgabe des geschäumten Erzeugnisses mit geänderter Schaumqualität) maximale Volumen hinter dem Pumpenausgang.

Gemäß einer besonders bevorzugten Ausführungsform der vorliegenden Erfindung weist die Pumpe mechanische Förderelemente auf, die mit der zu fördernden Flüssigkeit in Kontakt treten und eine mechanische Vermischung der zu fördernden Flüssigkeit mit der über das Luftanreicherungselement hinzugegebenen Luft bewirken. Ganz besonders bevorzugt im Sinne der vorliegenden Erfindung ist die Pumpe eine Zahnradpumpe, bei der im Falle einer Außenzahnradpumpe zwei Zahnräder - von denen das Eine über eine Welle von einem Motor angetrieben wird und das Andere durch das angetriebene Zahnrad bewegt wird - eine Förderung des Luft/Flüssigkeitsgemisches bewirken und darüber hinaus durch den sich im Volumen verändernden Verdrängungsraum zwischen den Zahnlücken eine intensive, mechanisch bedingte Vermischung von Luft mit der zu schäumenden Flüssigkeit erzielt wird.

In einer ebenfalls erfindungsgemäßen und bevorzugten Ausführungsform wird das Pumpengehäuse erwärmt wird, entweder über ein Zusatzheizung oder insbesondere durch die vorhandene Erwärmungsvorrichtung. Diese Ausführungsform hat den Vorteil, dass eine möglichst hohe Temperaturkonstanz des geschäumten Erzeugnisses erzielt wird, insbesondere bei längeren Stillstandszeiten. Entsprechend eine weiteren, ebenfalls bevorzugten Form der vorliegenden Erfindung ist die Erwärmungsvorrichtung ein Durchlauferhitzer. Unter einem "Durchlauferhitzer" wird in der vorliegenden Anmeldung eine Vorrichtung verstanden, bei der die Wärme über eine erhitzte Oberflache auf die durchströmende und zu erhitzende Flüssigkeit übertragen wird. Ein einfaches Beispiel für einen Durchlauferhitzer im Sinne der vorliegenden Erfindung ist ein Rohr, welches mit einem elektrischen Heizelement umgeben ist. Bei vielen der handelsüblichen Durchlauferhitzern sind das Rohr, in dem die zu erhitzende Flüssigkeit durchgeleitet wird, und das elektrische Heizelement in einem Block aus Aluminium oder einer Aluminiumlegierung eingegossen, um über die Ausnutzung der Wärmekapazität des Aluminiums die Wärmeübertragung auf das zu erhitzende Medium zu verbessern. Es können aber im Sinne der vorliegenden Erfindung auch Durchlauferhitzer auf dem Wärmetauscherprinzip verwendet werde, bei dem - beispielsweise eine erhitzte Wärmeübertragungsflüssigkeit mediengetrennt die zu erhitzende Flüssigkeit über eine metallische Oberfläche erhitzt. Dies hat den Vorteil, dass die Vorrichtung nach dem Betrieb mit hygienisch recht schwierig zu handhabbaren Flüssigkeiten, wie z.B. Milch, einfach zu reinigen ist (beispielsweise werden hartnäckige Inkrustationen, wie sie beim direkten Kontakt von Milch mit Hitzewendeln entstehen, effektiv bei einem Durchlauferhitzer vermieden). Solche Durchlauferhitzer werden auch als Thermoblöcke bezeichnet.

In einer besonders bevorzugten Ausführungsform der vorliegenden Erfindung ist das Luftanreicherungselement ein mechanisch oder elektrisch verstellbares Dosierventil mit einem Luftdurchfluss von weniger als 200 cm³/Min. bei einer Druckdifferenz zwischen 0,2 und 0,6 bar. Der Regelbereich des Dosierventil liegt besonders bevorzugt zwischen 10 bis 100 cm³ Luft pro Minute bei einer Druckdifferenz (zwischen dem Einlass und Auslass des Luftanreicherungselements) zwischen 0,2 und 0,6 bar. In diesem Bereich lassen sich verschiedene Milchqualitäten optimal in verschiedenen Schaumqualitäten variieren.

Gemäß einer besonders bevorzugten Ausführungsform der vorliegenden Erfindung ist zwischen dem Luftanreicherungselement und der Verbindung zum Einlass der Pumpe ein zusätzliches Ventil (8c) angeordnet. Auf diese Weise wird wirksam ein Rückfluss des geschäumten Erzeugnisses in das Luftanreicherungselement verhindert, was ansonsten zu Kontaminationen und Verengungen der Luftkanäle des Luftanreicherungselements - und somit zu Fehlfunktionen in der wiederholbaren Variation der Schaumqualität führen könnte.

Entsprechend eine weiteren, ebenfalls bevorzugten Form der vorliegenden Erfindung ist vor dem Einlass und/oder nach dem Auslass der Erwärmungsvorrichtung je ein zusätzliches Ventil (8a und 8b) angeordnet ist. Auf diese Weise wird durch das Ventil (8a) effektiv ein Rückfluss der erwärmten Milch in den Vorratsbehälter (meist gekühlte Milch mit +4 °C nach den HACCP-Vorschriften) verhindert. Durch das Ventil (8b) wird ein Abtropfen der erwärmten Milch in den Ausfluss und ein Verdrängung durch Luft in der Erwärmungsvorrichtung verhindert, was ansonsten die Bildung aerober Bakterien begünstigen würde.

In einer besonders bevorzugten Ausführungsform der vorliegenden Erfindung ist nach dem Auslass der Pumpe und vor dem Schaumauslass (4) ein Schaumhomogenisierungsvorrichtung, insbesondere eine Membrane, angeordnet. Hierdurch wird eine besonders homogene Porenverteilung im geschäumten Erzeugnis erzielt.

Gemäß einer weiteren Ausführungsform betrifft die vorliegende Erfindung die Verwendung der zuvor beschriebenen Vorrichtung zum Aufschäumen von Milch.

Die folgenden Beispiele dienen der Erläuterung der Erfindung, ohne diese hierauf zu beschränken.

**FIGUR I** zeigt die einfachste Ausführungsform der vorliegenden Erfindung.

Die zu schäumende Flüssigkeit wird aus einem Vorratsbehälter (1) durch das Erwärmungselement (7) hindurch geleitet und erhitzt. Nach dem Ausgang aus dem Erwärmungselement (7) wird der erwärmten Flüssigkeit Luft zugeführt, die vorher durch Luftanreicherungselement geleitet und volumenstrommäßig dosiert (voreingestellt) wurde. Dann wird die mit Luft versetzte Flüssigkeit einer Pumpe zugeführt und dort vermischt. Nach dem Ausgang der Pumpe ist aus dem Luft/Flüssigkeitsgemisch ein Schaum entstanden, der über den Schaumalass (4) in die gewünschte Gefäße gegeben wird.

In **Figur II** sind gegenüber der Figur **I** noch drei zusätzliche Ventile (8a), (8b) und (8c) vorhanden. Das Ventil (8a) ist zwischen dem Vorratsbehälter (1) und dem Einlass der Erwärmungsvorrichtung (7) angeordnet und verhindert einen Rückfluss der erwärmten Milch in den Vorratsbehälter. Das Ventil (8b) ist nach dem Auslass der Erwärmungsvorrichtung (7) und vor dem Verbindungspunkt mit der Luftzufuhr angeordnet und verhindert ein Abtropfen der erwärmten Milch in den Ausfluss und ein Verdrängung der Milch durch Luft in der Erwärmungsvorrichtung (7). Das Ventil (8c) ist zwischen dem Luftanreicherungselement und der Verbindung zum Einlass der Pumpe angeordnet und verhindert wirksam ein Rückfluss des geschäumten Erzeugnisses in das Luftanreicherungselement.

In **Figur III** sind gegenüber der Figur II noch eine Membrane nach dem Auslass der Pumpe (3) und vor dem Schaumauslass (4) angeordnet, welche eine noch verbesserte, homogenere Dispersität der Schaumporen erzielt, als mit eine der in Figur II dargestellten Vorrichtung möglich ist.

## Patentansprüche

1. Vorrichtung zum Erzeugen von erwärmten, fließfähigen geschäumten Erzeugnissen, bei der eine Flüssigkeit aus einem Vorratsbehälter über eine Einlassleitung einer Pumpe mit einem Auslass verbunden ist, die Flüssigkeit vor dem Einlass der Pumpe über ein Luftanreicherungselement mit Luft durchsetzt wird, und die Flüssigkeit nach dem Vorratsbehälter und vor dem Luftanreicherungselement über eine Erwärmungsvorrichtung erwärmt wird.

2. Vorrichtung nach Anspruch 1, **dadurch gekennzeichnet, dass** die Pumpe mechanische Förderelemente aufweist, die mit der zu fördernden Flüssigkeit in Kontakt treten und eine mechanische Vermischung der zu fördernden Flüssigkeit mit der über das Luftanreicherungselement hinzugegebenen Luft bewirken, und insbesondere eine Zahnradpumpe ist.

3. Vorrichtung nach den Ansprüchen 1 oder 2, **dadurch gekennzeichnet, dass** das Pumpengehäuse erwärmt wird, insbesondere durch die Erwärmungsvorrichtung.

4. Vorrichtung nach einem der vorhergehenden Ansprüche, **dadurch gekennzeichnet, dass** die Erwärmungsvorrichtung ein Durchlauferhitzer ist.

5. Vorrichtung nach einem der vorhergehenden Ansprüche, **dadurch gekennzeichnet, dass** das Luftanreicherungselement ein mechanisch oder elektrisch verstellbares Dosierventil mit einem Luftdurchfluss von weniger als 200 cm³/Min. bei einer Druckdifferenz zwischen 0,2 und 0,6 bar.

6. Vorrichtung nach einem der vorhergehenden Ansprüche, **dadurch gekennzeichnet, dass** zwischen dem Luftanreicherungselement und der Verbindung zum Einlass der Pumpe ein zusätzliches Ventil angeordnet ist.

7. Vorrichtung nach einem der vorhergehenden Ansprüche, **dadurch gekennzeichnet, dass** vor dem Einlass und/oder nach dem Auslass der Erwärmungsvorrichtung je ein zusätzliches Ventil angeordnet ist.

8. Vorrichtung nach einem der vorhergehenden Ansprüche, **dadurch gekennzeichnet, dass** vor dem nach dem Auslass der Pumpe ein Schaumhomogenisierungsvorrichtung, insbesondere eine Membrane, angeordnet ist.

9. Verwendung einer Vorrichtung nach einem der vorhergehenden Ansprüche zum Aufschäumen von Milch.
